# EUROPEAN PATENT SPECIFICATION

(11) **EP 2 998 533 B1**
(45) Date of publication and mention of the grant of the patent: **02.05.2018**
(21) Application number: 14779563.7
(22) Date of filing: 05.03.2014
(51) Int. Cl.: F01N 3/20, B01D 53/86, B01D 53/94, F01N 3/08, F01N 3/24

(54) **METHOD FOR DETERMINING DEGRADATION OF NOx STORAGE REDUCTION CATALYST IN EXHAUST GAS AFTERTREATMENT DEVICE**
VERFAHREN ZUR BESTIMMUNG DER ZERSETZUNG EINES NOX-SPEICHERREDUKTIONSKATALYSATORS IN EINER ABGASNACHBEHANDLUNGSVORRICHTUNG
PROCÉDÉ PERMETTANT DE DÉTERMINER LA DÉGRADATION D'UN CATALYSEUR DE RÉDUCTION DE STOCKAGE DE NOx DANS UN DISPOSITIF DE POST-TRAITEMENT DE GAZ D'ÉCHAPPEMENT

(30) Priority: 04.04.2013 JP 2013078537
(43) Date of publication of application: 23.03.2016
(73) Proprietor: Isuzu Motors Limited, Tokyo 140-8722 (JP)
(72) Inventor: NAGAOKA, Daiji, Fujisawa-shi, Kanagawa 252-0881 (JP)
(74) Representative: Schaumburg und Partner Patentanwälte mbB
(86) International application number: PCT/JP2014/055609
(87) International publication number: WO 2014/162813

(56) References cited:
- EP-A1- 2 149 686
- DE-A1-102011 084 986
- JP-A- 2001 303 937
- JP-A- 2001 303 937
- JP-A- 2002 195 089
- JP-A- 2005 337 029
- JP-A- 2005 337 029
- JP-A- 2007 263 053
- JP-A- 2008 045 479
- JP-A- 2008 045 479
- JP-A- 2008 255 965
- US-A1- 2012 095 666

## Description

### TECHNICAL FIELD

The present invention relates to an exhaust gas aftertreatment device using a NOx occlusion reduction catalyst, and in particular to a method of determining degradation of the NOx occlusion reduction catalyst of the exhaust gas aftertreatment device.

### BACKGROUND ART

Diesel oxidation catalyst (DOC) systems, diesel particulate filter (DPF) systems, NOx occlusion catalyst (lean NOx trap (LNT) or NOx storage reduction (NSR)) systems, urea selective catalytic reduction (SCR) systems, and so on are in practical use for exhaust gas aftertreatment devices of diesel engines.

The DOC system and the DPF system are effective systems for reducing PM. Although the DOC, which is provided at an upstream position in the exhaust passage, is not capable of oxidizing solid soot, the DOC oxidizes a large portion of soluble organic fraction (SOF), which accounts for 30 to 70% of the total PM, and also removes HC and CO at the same time. The DPF, which is provided at a downstream position, is formed of porous ceramics or the like having a fine pore size and captures a large portion of the PM contained in the exhaust gas.

A NOx occlusion reduction catalyst is constituted by a catalyst carrier of alumina (Al₂O₃) or the like, with a noble metal catalyst (e.g., Pt and Pd) and an occlusion material having a NOx occluding property (e.g., alkali metal including Na, K, and Cs, an alkaline-earth metal including Ca and Ba, and a rare earth including Y and La) supported on a surface of the catalyst carrier. The NOx occlusion reduction catalyst exhibits a function of either occluding NOx or discharging and purifying NOx depending on the oxygen concentration in the exhaust gas.

With a purification system having the NOx occlusion reduction catalyst, when the oxygen concentration in the exhaust gas is high (lean air-fuel ratio) as in a normal driving condition, NO in the exhaust gas is oxidized into NO₂ by the noble metal catalyst or the like, such as Pt and Pd, and the occlusion material occludes (stores) NO₂ in the form of a nitrate (Ba(NO₃)₂) so as to purify NOx.

However, if the occlusion material continues to occlude (collect and retain) NOx, the occlusion material becomes saturated with the nitrate and loses its occlusion property. Thus, the driving condition is altered, and exhaust gas recirculation (EGR), post-injection of fuel, or exhaust pipe injection is carried out in a condition of low oxygen concentration to produce a rich state, and the fuel is reduced over the noble metal catalyst so as to produce CO, HC, and H₂ in the exhaust gas. Thus, NOx is reduced, discharged, and purified.

In this manner, the purification system having the NOx occlusion reduction catalyst occludes NOx when the air-fuel ratio is lean (when the oxygen concentration is high), and reduces and purifies the occluded NOx when the air-fuel ratio is rich.

Major causes for degradation of the NOx occlusion reduction catalyst include sulfur poisoning and thermal degradation.

The sulfur poisoning occurs because the NOx occlusion reduction catalyst adsorbs and occludes SOx contained in the exhaust gas in addition to NOx. Unlike NOx, SOx cannot easily be desorbed. In order to release S from the occlusion material, the ambient temperature of the catalyst is raised to a high temperature (700 degrees C) and the air-fuel ratio is controlled to be rich. This changes Ba₂SO₄ to carbonate + SO₂, and desulfurization is achieved. Therefore, the NOx occlusion reduction catalyst needs to be regenerated by carrying out desulfurization control (S purge) at predetermined driving-distance intervals.

Similar to a normal oxidation catalyst, the thermal degradation is a phenomenon, in which a noble metal (precious metal) carried on the catalyst condenses with the heat, its specific surface area shrinks, and activation (reactivity) drops. This is called sintering.

### LISTING OF REFERENCES

PATENT LITERATURE 1: Japanese Patent No. 4474775
PATENT LITERATURE 2: Japanese Patent Application Laid-Open Publication (Kokai) No. 2008-261252
PATENT LITERATURE 3: Japanese Patent Application Laid-Open Publication (Kokai) No. 2012-87749
PATENT LITERATURE 4: DE102011084986 A1

### SUMMARY OF THE INVENTION

### PROBLEMS TO BE SOLVED BY THE INVENTION

After S purge is carried out for regeneration, it is not possible for a sensor to detect an amount of desulfurized S. Thus, an amount of desulfurization is unknown. Accordingly, when the catalyst performance drops, it is difficult to distinguish the thermal degradation from the sulfur poisoning.

The deterioration due to the thermal degradation is not recovered. The catalyst needs to be replaced. However, the sulfur poisoning may be recovered. Thus, it is necessary to identify the cause of the degradation at an early stage, and take necessary steps.

An amount of desulfurized S is estimated from catalyst temperature during the S purge and lambda (λ) using a map of desulfurized amounts. The map of desulfurized amounts is prepared by an experiment that measures the amount of desulfurized S in relation to the catalyst temperature and the lambda (λ = amount of supplied air/amount of theoretically necessary air).

In reality, however, amounts of desulfurized S vary with various disturbances during the S purge. Thus, even if the desulfurization looks perfect, the reality may be different, i.e., S may gradually accumulate in the NOx occlusion reduction catalyst. As a result, the purification rate drops. However, it is not possible to distinguish this from the thermal degradation.

Thus, an object of the present invention is to overcome the above-described problems, and to provide a method of determining degradation of the NOx occlusion reduction catalyst in the exhaust gas aftertreatment device, which can distinguish the sulfur poisoning of the NOx occlusion reduction catalyst from the thermal degradation.

### SOLUTION TO OVERCOME THE PROBLEMS

To achieve the above-mentioned object, the present invention provides a method of determining degradation of a NOx occlusion reduction catalyst in an exhaust gas aftertreatment device. An occlusion cycle for causing the NOx occlusion reduction catalyst to occlude NOx contained in an exhaust gas, and a rich reduction cycle for reducing and purifying the occluded NOx when the occlusion rate drops during the occlusion cycle are repeated alternately. The NOx occlusion reduction catalyst is connected to an exhaust pipe of an engine. The exhaust gas aftertreatment device is configured to perform S purge when the NOx occlusion reduction catalyst is poisoned by sulfur and the NOx occlusion rate decreases while the occlusion cycle and the rich reduction cycle are being repeated. The method includes preparing, in advance, a NOx occlusion map, which indicates the NOx occlusion amount of the NOx occlusion reduction catalyst during the occlusion cycle, on the basis of aging degradation. The method also includes obtaining an ideal NOx occlusion amount on the basis of the NOx occlusion map. The method also includes calculating an actual NOx occlusion amount during the occlusion cycle from a NOx sensor value. The method also includes determining whether degradation of the NOx occlusion reduction catalyst has occurred due to sulfur poisoning or due to thermal degradation, on the basis of a difference between the ideal NOx occlusion amount and the actual NOx occlusion amount.

Preferably, the NOx occlusion map is prepared to indicate the relation between the NOx occlusion amount, the aging degradation of the NOx occlusion reduction catalyst, and the exhaust gas temperature. Preferably, the ideal NOx occlusion amount during the occlusion cycle is obtained from the NOx occlusion map on the basis of the exhaust gas temperature during the occlusion cycle and an added-up amount of fuel consumption (total amount of fuel consumption during the occlusion cycle).

Preferably, the calculation of the actual NOx occlusion amount based on the NOx sensor value includes integrating a difference between a NOx concentration in the exhaust gas at an inlet of the NOx occlusion reduction catalyst and a NOx concentration in the exhaust gas at an outlet of the NOx occlusion reduction catalyst during the occlusion cycle.

When the difference between the ideal NOx occlusion amount and the actual NOx occlusion amount is smaller than a threshold value, it is preferred that the method determines no abnormality in the NOx occlusion amount. When the difference between the ideal NOx occlusion amount and the actual NOx occlusion amount is greater than the threshold value, it is preferred that the method performs the S purge again. It is preferred that in a subsequent occlusion cycle, the method obtains the ideal NOx occlusion amount and the actual NOx occlusion amount again, and compares the difference between the ideal NOx occlusion amount and the actual NOx occlusion amount to the threshold value. When the difference between the ideal NOx occlusion amount and the actual NOx occlusion amount is smaller than the threshold value, it is preferred that the method determines that the sulfur poisoning is recovered by the S purge and that there is no abnormality. When the difference between the ideal NOx occlusion amount and the actual NOx occlusion amount is still greater than the threshold value, it is preferred that the method determines that the thermal degradation has occurred.

### ADVANTAGES OF THE INVENTION

The present invention prepares, in advance, the NOx occlusion map that indicates the NOx occlusion amount of the NOx occlusion reduction catalyst that changes over time due to aging degradation. Because the present invention compares the ideal NOx occlusion amount, which is obtained from the NOx occlusion map, to the actual NOx occlusion amount, which is obtained from the NOx sensor value, the present invention demonstrates an excellent advantage, i.e., it is possible to determine (distinguish) the degradation due to sulfur poisoning and the thermal degradation.

### BRIEF DESCRIPTION OF THE DRAWINGS

Fig. 1 is a schematic view of an apparatus that carries out a method of determining degradation of a NOx occlusion reduction catalyst in an exhaust gas aftertreatment device according to an embodiment of the present invention.
Fig. 2 is a flowchart of the method of determining the degradation of the NOx occlusion reduction catalyst in the exhaust gas aftertreatment device.
Fig. 3 is a set of views useful to describe an ideal NOx occlusion amount and an actual NOx occlusion amount in an embodiment of the present invention. Specifically, Fig. 3(a) illustrates the NOx occlusion map, Fig. 3(b) illustrates relation between a traveling distance and a NOx occlusion amount when S purge is performed upon decrease of a NOx occlusion rate, and Fig. 3(c) is a view useful to describe the actual NOx occlusion amount during the occlusion cycle.

### MODE FOR CARRYING OUT THE INVENTION

A preferred embodiment of the present invention will be described below in detail with reference to the accompanying drawings.

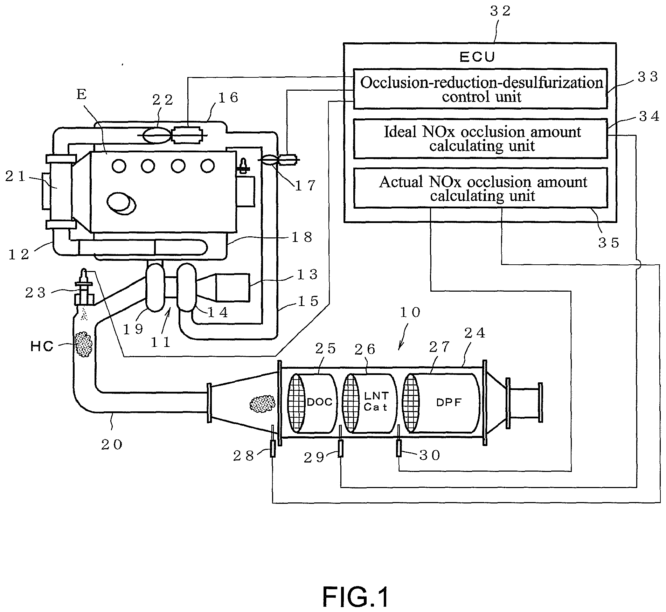

Fig. 1 illustrates an exhaust gas aftertreatment device 10 that uses a NOx occlusion reduction catalyst.

A turbocharger 11 and an EGR pipe 12 are connected to an intake part and an exhaust part of an engine E. The air taken in through an air cleaner 13 is compressed by a compressor 14 of the turbocharger 11. The compressed air is sent to an intake passage 15, and supplied into the engine E through an intake manifold 16 of the engine E. An intake valve 17 is provided in the intake passage 15 to regulate an amount of air introduced to the engine E.

An exhaust gas emitted from the engine E is discharged to a turbine 19 of the turbocharger 11 through an exhaust manifold 18 to drive the turbine 19 and discharged to an exhaust pipe 20.

The EGR pipe 12 is connected to the intake manifold 16 and the exhaust manifold 18. An EGR cooler 21 and an EGR valve 22 are connected to the EGR pipe 12. The EGR cooler 21 cools the exhaust gas flowing from the exhaust manifold 18 to the intake manifold 16, and the EGR valve 22 regulates the amount of EGR.

The exhaust gas aftertreatment device 10 has an exhaust pipe injector 23 provided in the exhaust pipe 20 downstream of the turbine 19. The exhaust gas aftertreatment device 10 also has a DOC 25, a NOx occlusion reduction catalyst 26, and a DPF 27 that are canned in this order in a canning receptacle 24. The canning receptacle 24 is formed in the exhaust pipe 20 downstream of the exhaust pipe injector 23.

An inlet NOx sensor 28 is provided upstream of the DOC 25. An exhaust gas temperature sensor 29 is provided at or near the inlet of the NOx occlusion reduction catalyst 26, and an outlet NOx sensor 30 is provided at or near the outlet of the NOx occlusion reduction catalyst 26.

Overall operations of the engine E are controlled by the ECU 32. The ECU 32 includes a control unit 33 for occlusion, reduction and desulfurization of the NOx occlusion reduction catalyst 26, an ideal NOx occlusion amount calculating unit 34, and an actual NOx occlusion amount calculating unit 35.

The occlusion, reduction and desulfurization control unit 33 performs an occlusion cycle for occluding NOx in an air-fuel ratio lean condition, and a rich reduction cycle for causing the exhaust pipe injector 23 to inject fuel (HC) in a pulsing manner thereby reducing and purifying NOx in an air-fuel ratio rich condition when the NOx occlusion rate drops. Also, the occlusion, reduction and desulfurization control unit 33 raises the exhaust gas temperature to 700 degrees C to perform the S purge when the NOx occlusion reduction catalyst 26 is poisoned by sulfur and the NOx occlusion rate drops while repeating the occlusion cycle and the rich reduction cycle. For example, the S purge may be performed immediately after the regeneration process is applied to the PM of the DPF 27. During the S purge, an amount of fuel injection in the engine E is controlled, and the multi-injection such as post injection from an injector is controlled. In addition, the injection of the fuel (HC) from the exhaust pipe injector 23 is controlled. Accordingly, during the S purge, the exhaust gas temperature is raised to 700 degrees C, and SOx occluded in the NOx occlusion reduction catalyst 26 is desulfurized.

In other words, the regeneration of the DPF 27 is carried out by ECU 32 when an amount of accumulated PM in the DPF 27 reaches a predetermined volume and a differential pressure across the DPF 27 reaches a predetermined value, or when a travelling distance reaches a predetermined value. The ECU 32 executes the automatic regeneration control to the PM accumulation. The fuel injection by means of the post injection or from the exhaust pipe injector 23 is performed during the PM regeneration in order to raise the exhaust gas temperature to 600 degrees C and burn the PM accumulated in the DPF 27. Because the exhaust gas temperature is high (about 600 degrees C) and the regeneration is performed in a rich-prohibited condition, the exhaust gas temperature is raised, subsequent to the completion of the PM regeneration, to about 700 degrees C by the fuel injection from the exhaust pipe injector 23 in order to perform the S purge.

The ideal NOx occlusion amount calculating unit 34 obtains an ideal amount of NOx occlusion from the exhaust gas temperature, given from the exhaust gas temperature sensor 29 during the occlusion cycle, and an accumulated amount of fuel consumption, on the basis of a NOx occlusion map (will be described).

The actual NOx occlusion amount calculating unit 35 integrates, with time, the difference between the NOx concentration in the exhaust gas at the inlet of the NOx occlusion reduction catalyst 26 and the NOx concentration in the exhaust gas at the outlet of the NOx occlusion reduction catalyst 26 during the occlusion cycle.

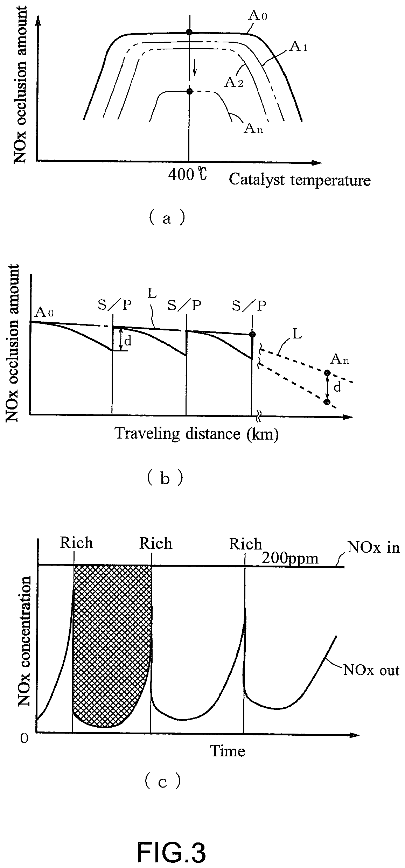

The ideal NOx occlusion amount calculating unit 34 and the actual NOx occlusion amount calculating unit 35 will be described with reference to Fig. 3.

Fig. 3(a) shows the NOx occlusion map during the NOx occlusion cycle.

The NOx occlusion amount depends upon the catalyst temperature (exhaust gas temperature). Also, the NOx occlusion amount decreases with the aging degradation of the NOx occlusion reduction catalyst. Thus, an experiment is carried out in advance to obtain an initial NOx occlusion curve Ao that indicates the NOx occlusion amount relative to the catalyst temperature of the NOx occlusion reduction catalyst during the NOx occlusion cycle. Because the NOx occlusion reduction catalyst deteriorates over time due to aging degradation, NOx occlusion curves A₁, A₂, ..., and Aₙ are prepared in turn, which indicate deteriorated capabilities on the basis of the traveling distance and/or other factors. The NOx occlusion curve Aₙ is a curve for replacing the catalyst due to the drop of the occlusion rate. The NOx occlusion curves A₁, A₂, ..., and Aₙ of the NOx occlusion map show the values when ideal desulfurization is carried out, and indicate the maximum NOx occlusion amounts at different (respective) levels of aging degradation.

When the ideal NOx occlusion amount is taken from the NOx occlusion map of Fig. 3(a), the initial NOx occlusion curve A₀, and the subsequent NOx occlusion curves A₁, A₂, ..., and Aₙ are sequentially selected on the basis of the traveling distance of the vehicle and the age of the vehicle. The selected NOx occlusion curve is then used to obtain the ideal NOx occlusion amount from the temperature during the NOx occlusion cycle and an added-up amount of fuel consumption during the occlusion cycle.

Fig. 3(b) shows the relation between the traveling distance and the NOx occlusion amount when the S purge is carried out. The S purge is carried out when the NOx occlusion reduction catalyst is poisoned with sulfur and the NOx occlusion rate drops as the NOx occlusion cycles and the rich reduction cycles are repeated.

In Fig. 3(b), L indicates the ideal NOx occlusion amount curve in the NOx occlusion cycle that changes over time due to aging degradation (traveling distance). It is determined that the NOx occlusion reduction catalyst is poisoned with sulfur when the occlusion amount decreases by a value d from the ideal NOx occlusion amount of the ideal NOx occlusion curve, i.e., when the traveling distance reaches about 1,000km. Fig. 3(b) shows that when the occlusion capability drops by the value d, the S purge (S/P) is carried out in order to recover the NOx occlusion capability. When the S purge is carried out, the SOx concentration in the exhaust gas is approximately 7ppm at most. The volume of SOx occluded by the NOx occlusion reduction catalyst corresponds to the value d, which indicates the drop of the NOx occlusion amount. Therefore, it is possible to decide the timing of the S purge from the engine running condition of the vehicle and the traveling distance of the vehicle, or an added-up amount of fuel consumption by that time.

The point (value) Aₙ on the broken line of the ideal NOx occlusion amount curve in Fig. 3(b) indicates the time for replacing the catalyst, i.e., the time when the NOx occlusion capability is not recovered even if the S purge is carried out because the NOx occlusion reduction catalyst is thermally degraded. The NOx occlusion capability is not recovered to a sufficient level even if the NOx occlusion capability is recovered by the value d.

Fig. 3(c) is a view useful to describe an actual NOx occlusion amount during the occlusion cycle, which is given by the actual NOx occlusion amount calculating unit 35.

Normally, the NOx concentration in the exhaust gas flowing into the NOx occlusion reduction catalyst is detected by the inlet NOx sensor 28. Usually, the NOx concentration is approximately 200ppm. In the drawing, the NOx concentration is constant (200ppm) for the sake of description. The NOx concentration at the outlet is detected by the outlet NOx sensor 30. Thus, the concentration difference between the inlet and the outlet indicates an amount of NOx occluded in the NOx occlusion reduction catalyst. Accordingly, the actual NOx occlusion amount is calculated by integrating the NOx concentration difference between the inlet and the outlet during the occlusion cycle, i.e., from the end of the rich reduction and purification process to the start of the next rich reduction and purification process. In other words, the actual NOx occlusion amount to be calculated is represented by the hatched area in Fig. 3(c).

In the embodiment of the present invention, the ideal NOx occlusion amount during the occlusion cycle prior to switching to the rich reduction and purification process is obtained from Figs. 3(a) and 3(b). Also, the actual NOx occlusion amount during the occlusion cycle is obtained from Fig. 3(c). The difference between the ideal NOx occlusion amount and the actual NOx occlusion amount is calculated, and it is possible to distinguish, based on the difference between the ideal NOx occlusion amount and the actual NOx occlusion amount, the degradation due to the sulfur poisoning of the NOx occlusion reduction catalyst from the thermal degradation.

Specifically, the S purge is carried out when the decrease in the NOx occlusion amount, caused by the sulfur poisoning, from the ideal NOx occlusion amount during the occlusion cycle reaches the value d as shown in Fig. 3(b). Thus, the value d is taken as a threshold value. It is then determined that there is no abnormality if the difference between the ideal NOx occlusion amount and the actual NOx occlusion amount is smaller than the threshold value. If the difference between the ideal NOx occlusion amount and the actual NOx occlusion amount is equal to or greater than the threshold value, then the S purge is forcibly carried out again in order to determine whether the NOx occlusion amount has decreased due to the thermal degradation or the NOx occlusion amount has decreased because the desulfurization of the previous S purge has been insufficient. After the S purge, the occlusion cycle is performed, and the ideal NOx occlusion amount and the actual NOx occlusion amount are obtained in this occlusion cycle. The difference between the ideal NOx occlusion amount and the actual NOx occlusion amount is compared to the threshold value. If the difference between the ideal NOx occlusion amount and the actual NOx occlusion amount is smaller than the threshold value, it is determined that the cause of the previous determination of degradation is the sulfur poisoning, and it is also determined that there is no abnormality. If the difference between the ideal NOx occlusion amount and the actual NOx occlusion amount is equal to or greater than the threshold value despite the S purge, and the NOx occlusion capability is not recovered, then it is determined that the recovery of the degraded catalyst is impossible, and certain indication is made by OBD (On-board diagnosis).

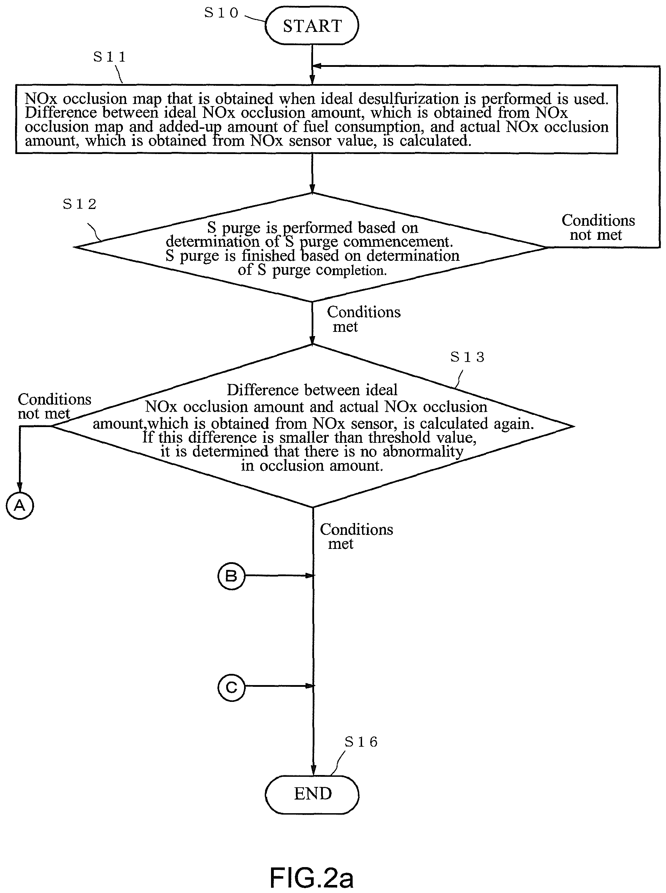

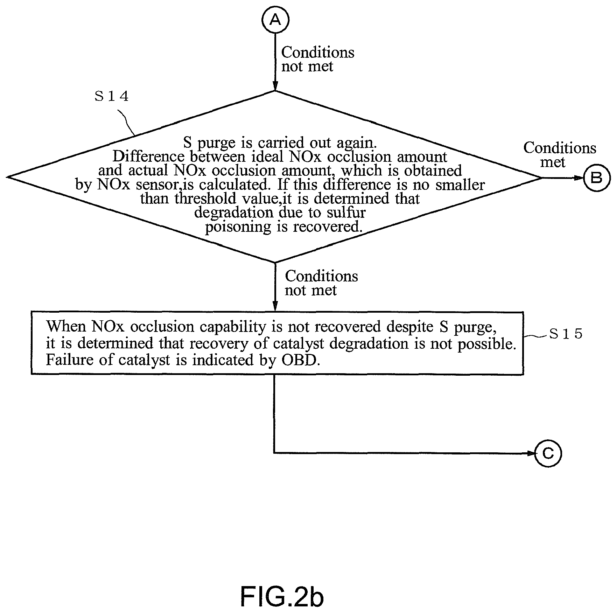

The processing (control) in the embodiment of the present invention will be described with reference to Fig. 2.

At Step S10, the control starts. At Step S11, the NOx occlusion map that is obtained when the ideal desulfurization is performed is taken. The ideal NOx occlusion amount is obtained from the NOx occlusion map and an added-up amount of fuel consumption. The actual NOx occlusion amount is obtained (decided) from the NOx sensor value or a corrected NOx sensor value. The difference between the ideal NOx occlusion amount and the actual NOx occlusion amount is calculated in each occlusion cycle.

Subsequently, it is determined at Step S12 whether the conditions for the S purge commencement are met or not. Specifically, if the difference calculated in Step S11 is smaller than the S purge commencement threshold, then it is determined the conditions are not met, and the control returns to Step S11. At Step S11, the occlusion cycle and the rich reduction and purification cycle are repeated to calculate the difference between the ideal NOx occlusion amount and the actual NOx occlusion amount.

At Step S12, the S purge is commenced when the difference between the ideal NOx occlusion amount and the actual NOx occlusion amount is equal to or greater than the predetermined value. When it is determined that the S purge should be finished, then the S purge is finished.

Subsequently, when the S purge is finished, a difference between the ideal NOx occlusion amount and the actual NOx occlusion amount, which is obtained by the NOx sensor, is calculated again at Step S13.

If the difference is smaller than the threshold value, it is determined that there is no abnormality in the occlusion amount. Then, it is determined that the conditions are met, and the control proceeds to END (Step S16).

If Step S13 determines that the difference between the ideal NOx occlusion amount and the actual NOx occlusion amount is equal to or greater than the threshold value, the S purge is carried out again at Step S14. Also, the difference between the ideal NOx occlusion amount and the actual NOx occlusion amount, which is obtained by the NOx sensor, is calculated again at Step S14.

If it is determined at Step S14 that the difference is no smaller than the threshold value (i.e., the conditions are met), it is then determined that the degradation due to the sulfur poisoning is recovered, and the control proceeds to END (Step S16).

If Step S14 determines that the difference is equal to or greater than the threshold value (i.e., the conditions are not met), it is determined at Step S15 that the NOx occlusion capability is not recovered even if the S purge is carried out. In other words, it is determined at Step S15 that the recovery of the catalyst degradation is not possible. After the failure of the catalyst is displayed (indicated) by the OBD, the control proceeds to END (Step S16).

As described above, the present invention can distinguish the thermal degradation of the NOx occlusion reduction catalyst from the sulfur poisoning, without providing additional sensors and other components.

Whether the recovery is possible or not is determined. Then, necessary treatment (S purge or OBD indication) is taken. Accordingly, it is possible to avoid the worsening of the exhaust gas, and prevent the fuel efficiency deterioration due to an unnecessarily rich fuel.

### REFERENCE NUMERALS AND SYMBOLS

20: Exhaust pipe
26: NOx occlusion reduction catalyst
E: Engine

## Claims

1. A method of determining degradation of a NOx occlusion reduction catalyst (26) in an exhaust gas aftertreatment device, the NOx occlusion reduction catalyst (26) being connected to an exhaust pipe (20) of an engine, the exhaust gas aftertreatment device being configured to perform repeatedly and alternately an occlusion cycle for occluding NOx contained in an exhaust gas with the NOx occlusion reduction catalyst, and a rich reduction cycle for reducing and purifying the occluded NOx when a NOx occlusion rate drops during the occlusion cycle, the exhaust gas aftertreatment device being configured to carry out S purge when the NOx occlusion reduction catalyst (26) is poisoned by sulfur and the NOx occlusion rate drops while the occlusion cycle and the rich reduction cycle are being repeated, said method comprising:
preparing, in advance, a NOx occlusion map, which indicates the NOx occlusion amount of the NOx occlusion reduction catalyst during the occlusion cycle, based on aging degradation;
obtaining an ideal NOx occlusion amount based on the NOx occlusion map;
calculating an actual NOx occlusion amount during the occlusion cycle from a NOx sensor value; and
determining whether degradation of the NOx occlusion reduction catalyst has occurred due to sulfur poisoning or due to thermal degradation, based on a difference between the ideal NOx occlusion amount and the actual NOx occlusion amount.

2. The method of determining degradation of a NOx occlusion reduction catalyst in an exhaust gas aftertreatment device according to claim 1, wherein the NOx occlusion map indicates relation between the NOx occlusion amount, the aging degradation of the NOx occlusion reduction catalyst and exhaust gas temperature, and the ideal NOx occlusion amount during the occlusion cycle is obtained from the NOx occlusion map based on the exhaust gas temperature during the occlusion cycle and an added-up amount of fuel consumption during the occlusion cycle.

3. The method of determining degradation of a NOx occlusion reduction catalyst in an exhaust gas aftertreatment device according to claim 1, wherein said calculating an actual NOx occlusion amount from a NOx sensor value includes time-integrating a difference between a NOx concentration in the exhaust gas at an inlet of the NOx occlusion reduction catalyst and the NOx concentration in the exhaust gas at an outlet of the NOx occlusion reduction catalyst during the occlusion cycle.

4. The method of determining degradation of a NOx occlusion reduction catalyst in an exhaust gas aftertreatment device according to any one of claims 1 to 3 further including determining no abnormality in the NOx occlusion amount when the difference between the ideal NOx occlusion amount and the actual NOx occlusion amount is smaller than a threshold value.

5. The method of determining degradation of a NOx occlusion reduction catalyst in an exhaust gas aftertreatment device according to claim 4 further including:
performing the S purge again when the difference between the ideal NOx occlusion amount and the actual NOx occlusion amount greater than the threshold value;
obtaining, in a subsequent occlusion cycle, the ideal NOx occlusion amount and the actual NOx occlusion amount again, and comparing the difference between the ideal NOx occlusion amount and the actual NOx occlusion amount to the threshold value;
determining, when the difference between the ideal NOx occlusion amount and the actual NOx occlusion amount is smaller than the threshold value, that the sulfur poisoning is recovered by the S purge and that there is no abnormality; and
determining, when the difference between the ideal NOx occlusion amount and the actual NOx occlusion amount is still greater than the threshold value, that the thermal degradation has occurred.

## Patentansprüche

1. Verfahren zur Bestimmung der Zersetzung eines NOx-Okklusionsreduktionskatalysators (26) in einer Abgasnachbehandlungsvorrichtung, wobei der NOx-Okklusionsreduktionskatalysator (26) an eine Abgasleitung (20) eines Motors angeschlossen ist, die Abgasnachbehandlungsvorrichtung ausgebildet ist, wiederholt und abwechselnd einen Okklusionszyklus zum Okkludieren von in einem Abgas enthaltenem NOx mit dem NOx-Okklusionsreduktionskatalysator und einen Fettreduktionszyklus zum Reduzieren und Reinigen des okkludierten NOx durchzuführen, wenn eine NOx-Okklusionsrate während des Okklusionszyklus fällt, wobei die Abgasnachbehandlungsvorrichtung ausgebildet ist, eine S-Spülung auszuführen, wenn der NOx-Okklusionsreduktionskatalysator (26) durch Schwefel vergiftet ist und die NOx-Okklusionsrate fällt, während der Okklusionszyklus und der Fettreduktionszyklus wiederholt werden, wobei das Verfahren umfasst:
vorgängiges Bereitstellen einer NOx-Okklusionskarte, die die NOx-Okklusionsmenge des NOx-Okklusionsreduktionskatalysators während des Okklusionszyklus angibt, auf Grundlage der Alterungszersetzung;
Erhalten einer idealen NOx-Okklusionsmenge auf Grundlage der NOx-Okklusionskarte;
Berechnen einer tatsächlichen NOx-Okklusionsmenge während des Okklusionszyklus aus einem NOx-Sensorwert; und
Bestimmen, ob eine Zersetzung des NOx-Okklusionsreduktionskatalysators infolge einer Schwefelvergiftung oder infolge einer thermischen Zersetzung aufgetreten ist, auf Grundlage einer Differenz zwischen der idealen NOx-Okklusionsmenge und der tatsächlichen NOx-Okklusionsmenge.

2. Verfahren zum Bestimmen der Zersetzung eines NOx-Okklusionsreduktionskatalysators in einer Abgasnachbehandlungsvorrichtung nach Anspruch 1, wobei die NOx-Okklusionskarte eine Beziehung zwischen der NOx-Okklusionsmenge, der Alterungszersetzung des NOx-Okklusionsreduktionskatalysators und einer Abgastemperatur angibt, und die ideale NOx-Okklusionsmenge während des Okklusionszyklus aus der NOx-Okklusionskarte auf Grundlage der Abgastemperatur während des Okklusionszyklus und einer aufaddierten Menge des Kraftstoffverbrauchs während des Okklusionszyklus erhalten wird.

3. Verfahren zum Bestimmen der Zersetzung eines NOx-Okklusionsreduktionskatalysators in einer Abgasnachbehandlungsvorrichtung nach Anspruch 1, wobei das Berechnen einer tatsächlichen NOx-Okklusionsmenge aus einem NOx-Sensorwert eine Zeitintegration einer Differenz zwischen einer NOx-Konzentration in dem Abgas an einem Einlass des NOx-Okklusionsreduktionskatalysators und der NOx-Konzentration in dem Abgas an einem Auslass des NOx-Okklusionsreduktionskatalysators während des Okklusionszyklus beinhaltet.

4. Verfahren zum Bestimmen der Zersetzung eines NOx-Okklusionsreduktionskatalysators in einer Abgasnachbehandlungsvorrichtung nach einem der Ansprüche 1 bis 3, ferner umfassend das Bestimmen, dass keine Abnormalität in der NOx-Okklusionsmenge vorliegt, wenn die Differenz zwischen der idealen NOx-Okklusionsmenge und der tatsächlichen NOX-Okklusionsmenge kleiner als ein Schwellwert ist.

5. Verfahren zum Bestimmen der Zersetzung eines NOx-Okklusionsreduktionskatalysators in einer Abgasnachbehandlungsvorrichtung nach Anspruch 4, ferner umfassend:
nochmaliges Durchführen der S-Spülung, wenn die Differenz zwischen der idealen NOx-Okklusionsmenge und der tatsächlichen NOx-Okklusionsmenge größer als der Schwellwert ist;
in einem nachfolgenden Okklusionszyklus nochmaliges Erhalten der idealen NOx-Okklusionsmenge und der tatsächlichen NOx-Okklusionsmenge und Vergleichen der Differenz zwischen der idealen NOx-Okklusionsmenge und der tatsächlichen NOx-Okklusionsmenge mit dem Schwellwert;
Bestimmen, wenn die Differenz zwischen der idealen NOx-Okklusionsmenge und der tatsächlichen NOx-Okklusionsmenge kleiner als der Schwellwert ist, dass die Schwefelvergiftung durch die S-Spülung geheilt ist und dass keine Abnormalität vorliegt; und
Bestimmen, wenn die Differenz zwischen der idealen NOx- Okklusionsmenge und der tatsächlichen NOx-Okklusionsmenge noch immer größer als der Schwellwert ist, dass die thermische Zersetzung aufgetreten ist.

## Revendications

1. Procédé de détermination de la dégradation d'un catalyseur de réduction d'occlusion de NOx (26) dans un dispositif de post-traitement de gaz d'échappement, le catalyseur de réduction d'occlusion de NOx (26) étant raccordé à un tuyau d'échappement (20) d'un moteur, le dispositif de post-traitement de gaz d'échappement étant configuré pour effectuer, de manière répétée et alternativement, un cycle d'occlusion permettant d'obtenir l'occlusion du NOx contenu dans un gaz d'échappement grâce au catalyseur de réduction d'occlusion de NOx, et un cycle de réduction riche permettant de réduire et de purifier le NOx occlus lorsqu'un taux d'occlusion de NOx tombe, pendant le cycle d'occlusion, le dispositif de post-traitement de gaz d'échappement étant configuré pour effectuer une purge S lorsque le catalyseur de réduction d'occlusion de NOx (26) est empoisonné par le soufre et que le taux d'occlusion de NOx tombe pendant que le cycle d'occlusion et le cycle de réduction riche sont répétés, ledit procédé comprenant :
la préparation, à l'avance, d'une carte d'occlusion de NOx qui indique la quantité d'occlusion de NOx du catalyseur de réduction d'occlusion de NOx pendant le cycle d'occlusion, sur la base de la dégradation due au vieillissement ;
l'obtention d'une quantité d'occlusion de NOx idéale sur la base de la carte d'occlusion de NOx ;
le calcul d'une quantité d'occlusion de NOx réelle pendant le cycle d'occlusion à partir d'une valeur détectée de NOx ; et
la détermination que la dégradation du catalyseur de réduction d'occlusion de NOx s'est produite ou non, à la suite de l'empoisonnement par le soufre ou à la suite d'une dégradation thermique, sur la base d'une différence entre la quantité d'occlusion de NOx idéale et de la quantité d'occlusion de NOx réelle.

2. Procédé de détermination de la dégradation d'un catalyseur de réduction d'occlusion de NOx dans un dispositif de post-traitement de gaz d'échappement selon la revendication 1, dans lequel la carte d'occlusion de NOx indique une relation entre la quantité d'occlusion de NOx, la dégradation due au vieillissement du catalyseur de réduction d'occlusion de NOx et la température du gaz d'échappement, et la quantité d'occlusion de NOx idéale pendant le cycle d'occlusion est obtenue à partir de la carte d'occlusion de NOx sur la base de la température du gaz d'échappement pendant le cycle d'occlusion et une valeur ajoutée de la consommation de carburant pendant le cycle d'occlusion.

3. Procédé de détermination de la dégradation d'un catalyseur de réduction d'occlusion de NOx dans un dispositif de post-traitement de gaz d'échappement selon la revendication 1, dans lequel ledit calcul d'une quantité d'occlusion de NOx réelle à partir d'une valeur détectée de NOx inclut l'intégration temporelle d'une différence entre une concentration en NOx dans le gaz d'échappement à une entrée du catalyseur de réduction d'occlusion de NOx et la concentration en NOx dans le gaz d'échappement à une sortie du catalyseur de réduction d'occlusion de NOx pendant le cycle d'occlusion.

4. Procédé de détermination de la dégradation d'un catalyseur de réduction d'occlusion de NOx dans un dispositif de post-traitement de gaz d'échappement selon l'une quelconque des revendications 1 à 3, comprenant en outre la détermination d'aucune anomalie dans la quantité d'occlusion de NOx lorsque la différence entre la quantité d'occlusion de NOx idéale et la quantité d'occlusion de NOx réelle est inférieure à une valeur seuil.

5. Procédé de détermination de la dégradation d'un catalyseur de réduction d'occlusion de NOx dans un dispositif de post-traitement de gaz d'échappement selon la revendication 4, comprenant en outre :
la nouvelle réalisation de la purge S lorsque la différence entre la quantité d'occlusion de NOx idéale et la quantité d'occlusion de NOx réelle est supérieure à la valeur seuil ;
la nouvelle obtention, dans un cycle d'occlusion ultérieur, de la quantité d'occlusion de NOx idéale et de la quantité d'occlusion de NOx réelle, et la comparaison de la différence entre la quantité d'occlusion de NOx idéale et de la quantité d'occlusion de NOx réelle avec la valeur seuil ;
la détermination, lorsque la différence entre la quantité d'occlusion de NOx idéale et la quantité d'occlusion de NOx réelle est inférieure à la valeur seuil, que l'empoisonnement par le soufre est récupéré par la purge S et qu'il n'existe aucune anomalie ; et
la détermination, lorsque la différence entre la quantité d'occlusion de NOx idéale et la quantité d'occlusion de NOx réelle est toujours supérieure à la valeur seuil, que la dégradation thermique s'est produite.
